# EUROPEAN PATENT APPLICATION

(11) **EP 0 836 872 A2**
(43) Date of publication of application: **22.04.1998**
(21) Application number: 97114606.3
(22) Date of filing: 22.08.1997
(51) Int. Cl.: A63F 9/22

(54) **A television game machine**

(30) Priority: 22.08.1996 JP 221602/96
(71) Applicant: Konami Co., Ltd., Kobe-shi, Hyogo-ken (JP)
(72) Inventor: Konishi, Hitoshi, Akashi-shi, Hyogo-ken (JP)
(74) Representative: Müller-Boré & Partner Patentanwälte

(57) **Abstract**

An object of this invention is to enable the implementation of a two-player mode using a program for a one-player mode. A television game machine according to this invention includes a game machine main body 2 having an operation unit including a monitor 4, a start button 5, a handle 6, a shift lever 7, an acceleration pedal 8, a brake pedal 9, and a selection switch 18 for selecting a one-player mode and a two-player mode. The television game machine according to this invention further includes a controller 11 having a road data storage 12 for storing a road image data, a picture processor 13 for displaying the road image based on the road image data on the monitor 4, a general car controller 14 for controlling general cars to run on the road image, a player's car controller 15 for controlling a player's car to run on the road image according to the operation of the operation unit, and a communication controller 17 for receiving a rival car data via a communication cable 20 when the two-player mode is selected.

## Description

The present invention relates to a television game machine such as a driving game machine in which a player's car and a plurality of general cars run on a road image based on a road image data to compete (time trial and contend for ranking).

### BACKGROUND OF THE INVENTION AND RELATED ART STATEMENT

Driving game machines in which a player is seated on a seat provided with an operation unit including a handle, an acceleration pedal, a brake pedal and a shift lever as in a driver's seat of an automotive vehicle and operates the operation unit while viewing the road image displayed on a monitor screen to simulatively drive a car on the screen have been spread. In these driving game machines, cars not participating in the competition (hereinafter, "general cars" ) which merely function as obstacles are displayed on the road image in addition to the car driven by the player.

Further, the driving game machines of this type are normally provided with a selection device for selecting a one-player mode and a two-player mode. When the two-player mode is selected, a position data of a player's car on the monitor screen of one driving game machine connected with the other driving game machine via a communication cable is transmitted to the other driving game machine via the communication cable, and a player's car of the one driving game machine is displayed on the monitor screen of the other driving game machine as a rival car which is a competitor of the player's car of the other driving game machine based on the received position data, so that the player's car, the general cars and the rival car are displayed on the same road image.

At this time, the road image is also displayed on the monitor screen of the one driving game machine based on the same road image data, and the player's car, the general cars and the rival car are likewise displayed. However, in this case, the rival car displayed on the monitor screen of the one driving game machine is displayed as the player's car on the monitor screen of the other driving game machine.

In the above conventional driving game machines, programs for both the one-player mode and the two-player mode are provided, the program for the one-player mode is implemented when the one-player mode is selected, whereas the program for the two-player mode is implemented when the two-player mode is selected. This leads to a problem of necessitating a huge capacity for storing the programs.

In view of the above problem, it is an object of the present invention to provide a television game machine capable of effecting a play mode for at least two players using a program for a one-player mode even when a two-player mode is selected.

### SUMMARY OF THE INVENTION

To fulfill the above object according to this invention, a television game machine, comprising: a machine main body including display means for displaying characters and operation means for moving the displayed characters on a screen, course display means for displaying a course image stored in a course storage on the display means, general character control means for moving general characters on the course, player's character control means for moving a player's character on the course according to the operation of the operation means, communication means for enabling the machine main body to receive a position data of a player's character of another machine main body via a communication cable, and selection means for selecting a one-player mode and a two-player mode, and when the two-player mode is selected by the operation of the selection means, the communication means receives the position data of the player's character of the other machine main body, and the general character control means causes the player's character of the another machine main body to move on the course as an additional general character.

With this construction, when the two-player mode is selected by the operation of the selection means, the general character control means controls the player's character of the other machine main body connected via the communication cable (a rival in the competition for the game machine) to move on the course as an additional general character.

Preferably, the player's character is a player's car and the player's character of the another machine main body is a rival car.

These and other objects, features and advantages of the present invention will become more apparent upon a reading of the following detailed description and accompanying drawings.

### BRIEF DESCRIPTION OF THE DRAWINGS

FIG. 1 is a perspective view showing the schematic construction of one embodiment of the invention,
FIG. 2 is a block diagram of the invention,
FIG. 3 is a flow chart showing the operation of the invention, and
FIG. 4 is an explanatory diagram showing one example of monitor screens of two players' game machines when a two-player mode is selected on the game machine of this invention.

### DETAILED DESCRIPTION OF THE PREFERRED EMBODIMENTS OF THE INVENTION

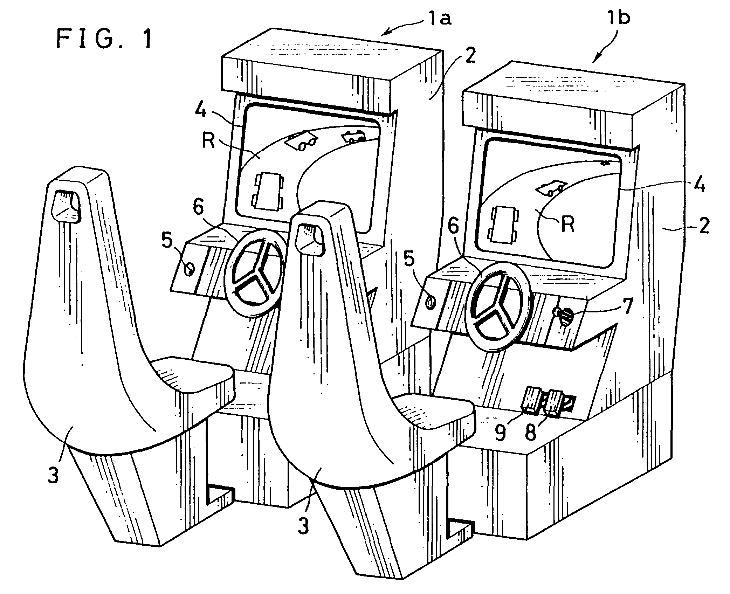

A driving game machine as one embodiment of the invention is described with reference to FIGS. 1 to 4.

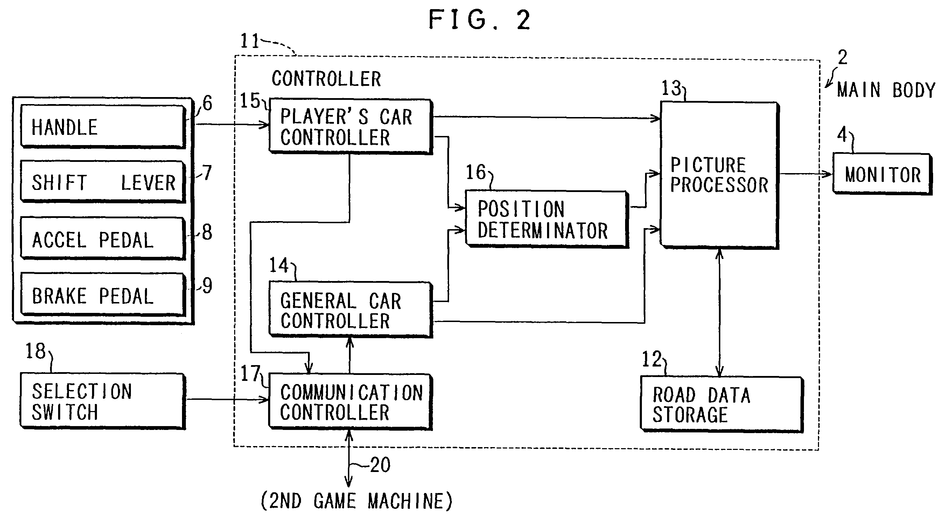

FIG. 1 shows first and second game machines 1a, 1b installed side by side which are two driving game machines connected with each other via a communication cable (not shown). Each driving game machine is provided with a machine main body 2 and a seat 3 on which a player is seated. The machine main body 2 is provided with an operation unit including a monitor 4 as a display means comprised of a CRT for displaying a game image, a start button 5 used to start a game, a handle 6 for changing; a running direction of a player's car on the game screen, a shift lever 7 for shifting a gear of the car, an acceleration pedal 8 pressed to accelerate the car, and a brake pedal 9 for decelerating the car. Although unillustrated in FIG. 1, the machine main body 2 is also provided with a selection switch as a selection means for selecting a one-player mode and a two-player mode (see FIG. 2) and a coin slot.

Further, the machine main body 2 of each of the game machines 1a, 1b is provided with a built-in controller 11 comprised of, e.g. a CPU as shown in FIG. 2 in addition to the aforementioned monitor 4 and various other operation members. The controller 11 is comprised of a road data storage 12, a picture processor 13, a general car controller 14, a player's car controller 15, a position determinator 16 and a communication controller 17. A timer for counting a game time is provided internally or externally with the controller 11.

In the road data storage 12, a specified road image data is stored. The picture processor 13 has a function as a road display device for displaying a road image based on the road image data stored in the road data storage 12 on the screen of the monitor 4.

The general car controller 14 controls the picture processor 13 so as to cause a plurality of general cars which function merely as obstacles on the road image displayed on the monitor 4 to run under the conditions of a predetermined speed and lane changing frequency, etc. The player's car controller 15 controls the picture processor 13 so as to cause the player's car to run on the road image using operation data of the operation members such as the handle 6 and a motion program in accordance with automotive engineering stored in an unillustrated ROM.

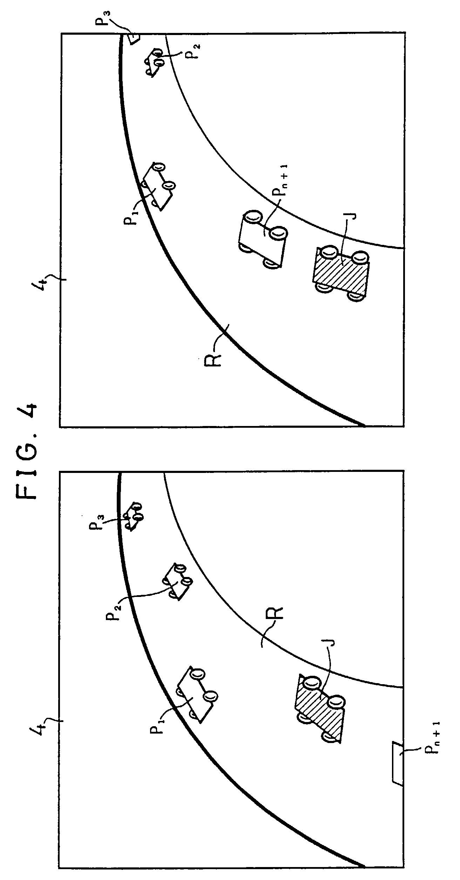

At this time, a road image R as shown in FIG. 4 is displayed on the screen of the monitor 4 by the picture processor 13. The player's car J and 1st to n-th general cars P1, P2, ..., Pn running on the road image are displayed. The general car controller 14 successively calculates position data in order to run the general cars, and has (n+1) storage portions for temporarily storing the position data before a next position data is calculated. The 1st to n-th storage portions are set to store the position data of the general cars P1 to Pn, and the (n+1)th storage portion is set to store the position data of the rival car received from the other game machine 1b in the same manner that the position data of the general data are stored when the two-player mode is selected. When the one-player mode is selected, the general car controller 14 reads the position data of the 1st to (n+1)th general cars P1 to P(n+1) from the storage portions, and displays the cars having corresponding colors and designs designated therefor (the cars may have same color and design) in corresponding positions on the screen. The general car P(n+1) whose position data is not read is not displayed because no position data is available (or this car P(n+1) may still be in its initial position).

The position determinator 16 determines a positional relationship between the player's car and the general cars on the road image concerning a contact, a crash and the like and a positional relationship between the general cars on the road image, and also determines the general car(s) located within a predetermined field of vision of the player's car.

When the two-player mode is selected by operating the selection switch 18 shown in FIG. 2, the communication controller 17 of the controller 11 operates and, for example, the varying position data of the player's car of the second game machine 1b, i.e. of the rival car of the first game machine 1a is transmitted in real time to the communication controller 17 of the first game machine 1a. The general car controller 14 replaces the position data of the (n+1)th general car P(n+1) by the position data of the rival car received by a receiving portion of the communication controller 17. The picture processor 13 is so controlled as to run the (n+1)th general car P(n+1) on the road image displayed on the monitor 4. If there is provided a display data based on which the (n+1)th general car P(n+1) is displayed in color and design which are different from those of the 1st to n-th general cars P1 to Pn or indicated by a specific mark, the (n+1)th general car P(n+1) can be distinguished as a specific rival car on the screen.

Similarly, in the second game machine 1b, the position data of the player's car of the first game machine 1a, i.e. of the rival car of the second game machine 1b which is transmitted from a transmitting portion of the communication controller 17 is received, and this rival car runs as the (n+1)th general car P(n+1) on the road image displayed on the monitor 4.

It should be noted that the communication controller 17 does not operate when the one-player mode is selected by the operation of the selection switch 18 and, accordingly, the position data of the rival car is not received from the other game machine. The communication controller 17 may be so constructed as to prohibit only the data reception by the receiving portion. In this case, the transmitting portion is allowed to constantly transmit the position data of the player's car.

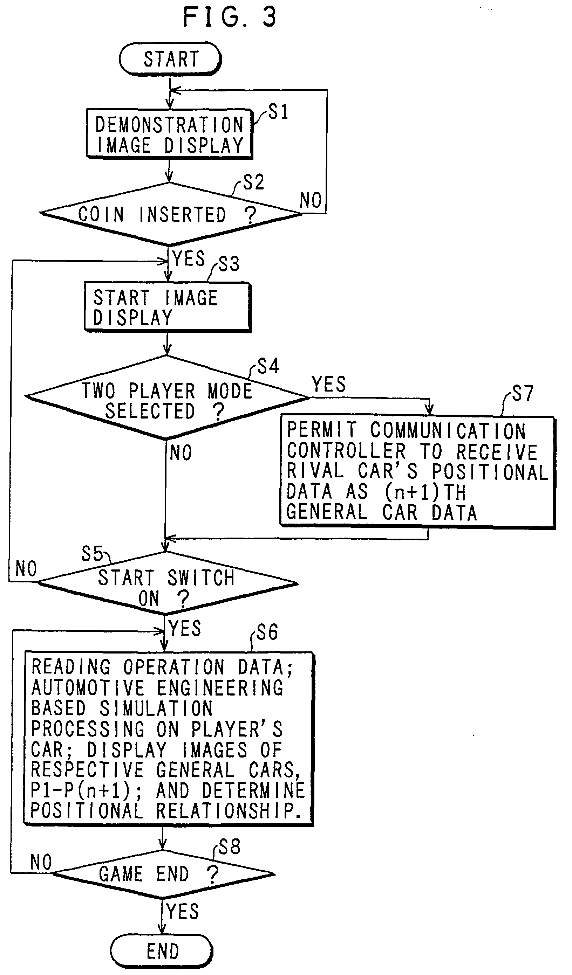

Next, a series of operations are described with reference to a flow chart of FIG. 3. Although only the operation of the first game machine 1a is described herebelow, the second game machine 1b operates in a similar manner.

As shown in FIG. 3, when the game machine 1a is powered on, a demonstration image is displayed on the monitor 4 by the picture processor 13 (Step S1). It is then judged whether a coin has been inserted into the coin slot (Step S2). This routine returns to step S1 if the judgement is "NO", whereas a start image is displayed by the picture processor 13 (Step S3) if the judgement is "YES".

Subsequently, it is judged whether the two-player mode has been selected by the operation of the selection switch 18 (Step S4). It is then judged whether the start switch 5 has been turned on (Step S5) if the judgement of Step S4 is "NO", whereas this routine returns to Step S3 if the judgement of Step S5 is "NO".

On the other hand, if the judgement of Step S5 is "YES", the images of the player's car and the respective general cars are displayed (Step S6). Specifically, the player's car controller 15 reads the operation data of the operation members such as the handle 6 and the acceleration pedal 8, performs an automotive engineering based simulation processing in accordance with the car motion program stored in the ROM, and displays the image of the player's car substantially in the center of the screen of the monitor 4 where the road image is displayed. Further, the general car controller 14 displays the images of the general cars running within the field of vision of the player's car on the road image, and the position determinator 16 determines a positional relationship between the player's car and the general cars concerning a contact and a crash.

If the judgement of step S4 is "YES", this routine proceeds to step S7, in which the transmission of the varying position data of the player's car of the second game machine 1b, i.e. of the rival car of the first game machine 1a to the communication controller 17 via the communication cable 20 is enabled. In Step S6, the general car controller 14 replaces the position data of the (n+1)th general car P(n+1) by the position data of the rival car received by the communication controller 17 (i.e. the received position data is stored in the storage portion for storing the position data of the general car P(n+1)). When the one-player mode is selected (NO in Step S4), since there is no data in the storage portion for temporarily storing the position data of the general car P(n+1), the general car controller 14 does not display the general car P(n+1). On the other hand, in the two-player mode, the rival car is displayed since the data corresponding thereto is stored in the storage portion for storing the position data of the general car P(n+1), or since this car is not in its initial position.

In Step S7, in addition to the display of the image of the player's car by the player's car controller 15 and the display of the images of n general cars by the general car controller 14, the general car controller 14 controls the picture processor 13 so as to cause the (n+1)th general car P(n+1) whose position data was newly received to run on the road image displayed on the monitor 4.

Thereafter, whether the game has ended is decided by detecting whether a time counted by the timer has reached a predetermined game time (Step S8). This routine returns to Step S6 upon the decision that the game has not yet ended if the judgement is "NO", whereas the operation ends upon the decision that the game has ended if the judgement is "YES". The game may end under a condition that either one or both of the player's car and the general car P(n+1) reach the goal.

According to this embodiment, when the two-player mode is selected by the operation of the selection switch 18, the player's car data of the second game machine 1b connected via the communication cable 20 (i.e. the rival car data) is received by the communication controller 17, and the general car controller 14 replaces the data of the (n+1)th general car P(n+1) by the received rival car data to cause the rival car to run on the road image. Accordingly, in the two-player mode, the controller 11 performs the same running control processing as the one for the general cars P1, P2, ..., Pn in accordance with the program for the one-player mode (although a running control is actually performed for the general car P(n+1) (a flow chart for the general cars P1 to P(n+1), the general car P(n+1) is not displayed since the position data thereof is not inputted). Thus, unlike the prior art, it is not necessary to further provide a program for the two-player mode so as to respond to the selection of the two-player mode. This leads to a smaller number of programs to be installed and, therefore, to a reduced production cost.

Although the invention is applied to the game machine for business use in the foregoing embodiment, the game machines to which the invention is applicable are not limited to those for business use. The invention is also applicable to home TV game machines provided the two-player mode is selectable, and the same effects as above can be obtained with these machines.

Further, the inventive game machine is not limited to the two-player mode, but is applicable to a game machine with which 2, 3, or more players can simultaneously play a game. In this case, if, for example, up to four players can play, it is sufficient to provide three extra general cars P(n+1), P(n+2) and P(n+3), and to allocate the position data of the player's cars of other game machines 1b, 1c, 1d to the general cars P(n+1), P(n+2), P(n+3) in a specific order.

Further, although this embodiment is described taking a driving game machine as an example, the invention is also applicable to a competition type game by bicycles, yachts, fighters, players (competition with a specific opponent in a marathon or a track event) provided a character operable by a player in the one-player mode and other general characters (the operation of which is controlled by the game machine) can be distinguishably displayed.

As described above, according to the invention, when the two-player mode is selected by the operation of the selection means, the general character control means causes the player's character of the other machine main body connected via the communication cable to move on the course as an additional general character. Accordingly, it is sufficient to install a program for the one-player mode in the general character control means. In other words, it is not necessary to provide the programs for both the one-player mode and the two-player mode. This advantageously reduces a capacity and a burden on software.

Although the present invention has been fully described by way of example with reference to the accompanying drawings, it is to be understood that various changes and modifications will be apparent to those skilled in the art. Therefore, unless otherwise such changes and modifications depart from the scope of the present invention, they should be construed as being included therein.

## Claims

1. A television game machine, comprising:
a machine main body including display means for displaying characters and operation means for moving the displayed characters on a screen,
course display means for displaying a course image stored in a course storage on the display means,
general character control means for moving general characters on the course,
player's character control means for moving a player's character on the course according to the operation of the operation means,
communication means for enabling the machine main body to receive a position data of a player's character of another machine main body via a communication cable, and
selection means for selecting a one-player mode and a two-player mode, when the two-player mode is selected by the operation of the selection means, the communication means receives the position data of the player's character of the other machine main body, and the general character control means causes the player's character of the another machine main body to move on the course as an additional general character.

2. A television game machine according to claim 1, wherein the player's character is a player's car and the player's character of the another machine main body is a rival car.

3. A television game machine according to claim 1, wherein when the one player mode is selected by the selection means, the communication means is inoperative to receive the position data of the player's character of the another machine main body.

4. A television game machine according to claim 3, wherein the display means does not display a general character whose position data is not set by the general character control means.

5. A television game machine according to claim 1, wherein the communication means is operable to send the position data of the player's character to another machine main body irrespective of the one-player mode and the two-player mode selected by the selection means.
